Europäisches Patentamt

European Patent Office

Office européen des brevets

(11) Veröffentlichungsnummer: **0 250 818 B1**

# EUROPÄISCHE PATENTSCHRIFT

(45) Veröffentlichungstag der Patentschrift: 27.11.91

(51) Int. Cl.⁵: **H01S 3/133**, G02F 1/03

(21) Anmeldenummer: 87107101.5

(22) Anmeldetag: 16.05.87

(54) Verfahren zur Stabilisierung eines integriert-optischen Resonators.

(30) Priorität: 24.05.86 DE 3617562

(43) Veröffentlichungstag der Anmeldung:
07.01.88 Patentblatt 88/01

(45) Bekanntmachung des Hinweises auf die
Patenterteilung:
27.11.91 Patentblatt 91/48

(84) Benannte Vertragsstaaten:
AT BE DE ES FR GB IT NL SE

(56) Entgegenhaltungen:
DE-A- 3 421 851

(73) Patentinhaber: Standard Elektrik Lorenz Aktiengesellschaft
Lorenzstrasse 10
W-7000 Stuttgart 40(DE)

(72) Erfinder: Strobel, Otto August, Dr.
Rinnenbach 31
W-7302 Ostfildern 2(DE)

(74) Vertreter: Graf, Georg Hugo, Dipl.-Ing. et al
Standard Elektrik Lorenz AG Patent- und Lizenzwesen Postfach 30 09 29
W-7000 Stuttgart 30(DE)

**Beschreibung**

Die vorliegende Erfindung bezieht sich auf ein Verfahren zur Stabilisierung eines optischen Resonators gemäß dem Oberbegriff des Anspruchs 1.

Ein derartiger Resonator ist an sich bekannt und bei dem aus der DE-OS 34 21 851 bekannten Verfahren verwendet. Bei derartigen Resonatoren ist die Brechungszahl und damit die Filterkurvenmittenwellenlänge von der Temperatur des Resonators abhängig. Bei Verwendung des Resonators gemäß dem bekannten Verfahren zur Wellenlängenstabilisierung eines Lasers erhält man durch diese temperaturbedingte Drift der Filterkurvenmittenwellenlänge des Resonators eine entsprechende Drift der Laser-Mittenwellenlänge.

Mit der Erfindung soll daher die Aufgabe gelöst werden, die Temperaturdrift der Filterkurvenmittenwellenlänge eines Resonators zu beseitigen.

Gelöst wird diese Aufgabe durch die im Kennzeichen des Anspruchs 1 angegebenen Merkmale. Damit kann die genannte Drift auf ca. $10^{-9}$ geregelt werden, also eine hochkonstante Filterkurvenmittenwellenlänge erhalten werden.

Weitere vorteilhafte Einzelheiten der Erfindung sind nachfolgend anhand der in der Zeichnung veranschaulichten Ausführungsbeispiele beschrieben.

Es zeigen:

Fig. 1     die Draufsicht auf einen Resonator,

Fig. 2     denselben von der Stirnseite,

Fig. 3     die Filterkurve desselben,

Fig. 4     die Fabry-Perot-Moden der beiden auftretenden Polarisationszustände mit der Veranschaulichung des Phasenschaltverfahrens,

Fig. 5     den schematischen Schaltungsaufbau zur Durchführung des Verfahrens mit optischer Trennung der beiden Polarisationsmoden und

Fig. 6     den schematischen Schaltungsaufbau zur Durchführung des Verfahrens mit elektronischer Trennung der beiden Polarisationsmoden.

Mit 1 ist ein sog. integriert-optischer, als Fabry-Perot-Interferometer verwendeter Resonator bezeichnet, auf dessen aus beispielsweise Lithiumniobat bestehendem dünnen rechteckigen Substrat 2 durch Eindiffusion von Titan ein als der eigentliche optische Resonator wirkende Streifen 3 gebildet ist. Die beiden Stirnflächen 4, 5 sind planparallel zueinander geschliffen und poliert. Zu beiden Seiten des Streifens 3 ist je eine Elektrode 6, 7 vorgesehen. Durch Anlegen einer Spannung an diese Elektroden 6, 7 kann der Brechungsindex n des Resonators 1 verändert und somit die Filterkurve, also auch die Filterkurvenmittenwellenlänge, zu höheren oder tieferen Wellenlängen verschoben werden.

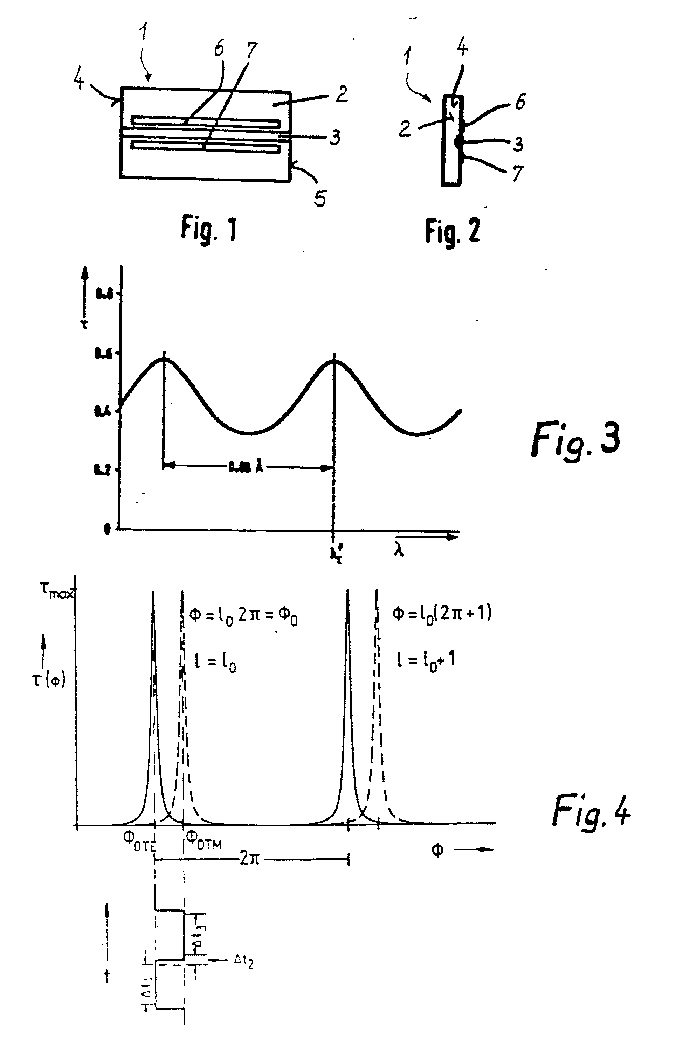

Eine typische Filterkurve zeigt die Fig. 3, wobei mit $\lambda_C^F$ die Filterkurvenmittenwellenlänge bezeichnet ist.

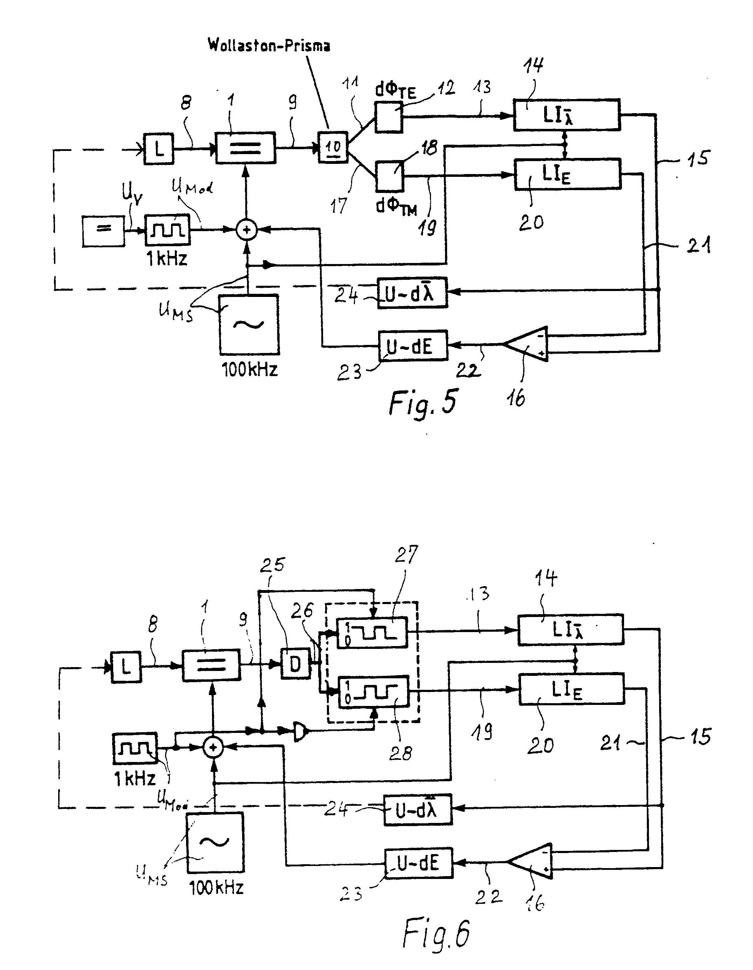

Zur Verwendung als integriert-optisches Fabry-Perot-Interferometer wird die linear polarisierte kohärente Strahlung eines Lasers L (siehe Figuren 5, 6) auf einer Stirnseite 4 oder 5 des Resonators 1 eingestrahlt.

Von dem Laser L wird gemäß Fig. 5 und 6 ein Teilstrahl 8, beispielsweise ein rückwärts austretender Strahl auf der einen Seite 4 in den Resonator 1 eingestrahlt. Dabei erhält man auf der Austrittsseite 5 die Fabry-Perot-Transmission, wenn der Resonator wie im vorliegenden Fall für diese Wellenlänge als Fabry-Perot-Interferometer geeignet ist und verwendet wird.

Die Erfindung geht nun von der Erkenntnis aus, daß der Teilstrahl 8 unter einem solchen Winkel eingestrahlt werden kann, daß dabei eine normalerweise unerwünschte Aufteilung in zwei Polarisationsebenen auftritt. Die Mittenwellenlänge der beiden auftretenden Polarisationen ist infolge unterschiedlicher Brechzahlen im Resonator 1 verschieden. Es können dann die in Fig. 4 dargestellten beiden Polarisationsmoden $\phi_{OTE}$ und $\phi_{OTM}$ auftreten, wenn die Filterkurvenmittenwellenlänge des Resonators im Bereich dieser Moden liegt. Dies kann dadurch erreicht werden, daß an die Elektroden 6, 7 des Resonators 1 eine solche Gleichspannung oder Vorspannung $U_V$ angelegt wird, bei der der Brechungsindex n des Resonators 1 so eingestellt wird, daß die Transmissionskurve in den notwendigen Bereich fällt. Durch entsprechende Umschaltung der Vorspannung $U_V$ z.B. in Form einer modulierenden Rechteckspannung $U_{Mod}$ oder durch Zuschalten einer Zusatzspannung, kann nun die Spannung und der Brechungsindex des Resonators 1 so eingestellt werden, daß bei der einen Spannung die eine Polarisationsmode $\phi_{OTE}$ und bei der anderen Spannung die andere Polarisationsmode $\phi_{OTM}$ auftritt. Erstere ist in Fig. 4 voll ausgezeichnet und letztere gestrichelt dargestellt.

Weiterhin geht die Erfindung von der neuen Erkenntnis aus, daß die Phasenlage der Polarisationsmode $\phi_{OTM}$ gegenüber der Polarisationsmode $\phi_{OTE}$ in der Phasenlage versetzt ist und die gegenseitige Phasenlage sich außerdem mit der Temperatur des Resonators 1 ändert. Diese temperaturbedingte Änderung der Phasenlage wird beim erfindungsgemäßen Verfahren dazu herangezogen, die Temperaturdrift des Resonators 1, d.h. die temperaturabhängige Drift der Transmissionskurve der Polarisationsmode $\phi_{OTE}$, zu eliminieren, indem die Ausgangsstrahlung 9 detektiert und in ein elektrisches Signal umgewandelt wird, daraus die o.g. temperaturbedingte Phasenverschiebung der beiden Polarisationsmoden festgestellt und aus der Größe der Phasenverschiebungen ein Steuersignal abgeleitet wird, über das die temperaturbedingte Phasenverschiebung der Polarisationsmode $\phi_{OTE}$ zu Null geregelt wird. Dies geschieht dadurch, daß die Temperatur des Resonators 1 durch eine dem Resonator 1 zugeordnete Temperaturregeleinrichtung, z.B. auf der Basis des Peltiereffekts und/oder der Brechungsindex n des Resonators 1 durch Anlegen einer Steuerspannung an die Elektroden 6, 7 des Resonators 1 so eingestellt wird bzw. werden, daß die temperaturbedingte Phasenverschiebung der Polarisationsmode $\phi_{OTE}$ verschwindet. Dadurch erhält man einen als Fabry-Perot-Interferometer verwendbaren Resonator 1 mit sehr hoher Konstanz der Transmissionskurve. Werte der relativen Wellenlängenkonstanz von $10^{-9}$ können realisiert werden.

Nachfolgend ist das Verfahren anhand des in Fig. 5 gezeigten Schaltschemas beschrieben:
Vom Laser L wird ein Teilstrahl 8 in den Resonator 1 auf der einen Stirnseite 4 in einen solchen von $0°$ und $90°$ von der Hauptachse der Polarisation abweichenden Winkel eingeleitet, daß die beiden möglichen Polarisationsarten entstehen. Der Resonator 1 ist so ausgelegt, daß er im Bereich der Wellenlänge des Laserstrahls als Fabry-Perot-Interferometer wirkt und eine maximale Transmission in diesem Bereich besitzt.

An die Steuerelektroden des Resonators 1 ist eine rechteckförmige Modulationsspannung $U_{Mod}$ von z.B. 1 kHz gelegt, mit der von der einen Polarisationsmode $\phi_{OTE}$ auf die andere $\phi_{OTM}$ umgeschaltet werden kann, indem durch die Spannungssteuerung die Brechungszahl des Resonators 1 entsprechend geändert wird.

Der den Resonator 1 verlassende Ausgangsstrahl 9 wird optisch aufgespalten, z.B. durch ein Wollaston-Prisma 10. Der die Änderung des Polarisationsmodes $d\phi_{TE}$ enthaltende Strahl 11 wird einem ersten optoelektrischen Detektor 12, z.B. einer Fotodiode, zugeleitet, der ein entsprechendes erstes detektiertes Meßsignal 13 einem ersten Phasendetektor (Lock-in-Verstärker) 14 eingibt. Der Ausgang 15 des ersten Phasendetektors 14 ist auf den einen Eingang (+) eines Differenzglieds 16 geschaltet. Der Strahl 17, der die Änderung der Polarisationsmode $d\phi_{TM}$ enthält, wird einem zweiten optoelektrischen Detektor 18 zugeleitet, dessen Ausgang ein zweites Meßsignal 19 liefert, das einem zweiten Phasendetektor zugeführt wird. Das Ausgangssignal 21 des zweiten Phasendetektors 20 wird dem zweiten Eingang (-) des Differenzglieds 16 eingegeben. Letzterer gibt ein der temperaturbedingten Phasenverschiebung entsprechendes Steuersignal 22 über ein Steuer- oder Regelglied 23 an die Steuerelektroden 6, 7 des Resonators 1. Dessen Brechungszahl wird dadurch so verändert, daß die temperaturbedingte Phasenverschiebung zwischen den beiden Polarisationsmoden zu Null wird.

Anstelle oder zusätzlich zu der elektrischen Ansteuerung des Resonators 1 kann auch dessen Temperatur so geregelt werden, daß die Phasenverschiebung verschwindet. Beispielsweise können hierzu Peltierelemente Verwendung finden.

Gemäß einer vorteilhaften Weiterbildung der Erfindung kann dem Resonator 1 noch eine zweite sinusförmige Modulationsspannung $U_{MS}$ aufgedrückt werden, die z.B. 100 kHz beträgt. Durch diese wird der Ausgangsstrahl 19 moduliert, zugleich liegt diese Modulationsspannung $U_{MS}$ an den Phasendetektoren 14 und 20 an. Der Ausgang des ersteren wird einem Steuer-oder Regelglied 24 eingegeben, dessen Ausgang den Eingangsstrom des Lasers L und/oder dessen Temperatur so verändert, daß die Lasermittenwellenlänge des Lasers L gleich der Filterkurvenmittenwellenlänge des stabilisierten Resonators 1 wird bzw. bleibt. Dieses Verfahren ist ausführlich in der DE-OS 34 21 851, auf die hier ausdrücklich verwiesen wird, beschrieben. Mit dem vorliegenden Verfahren kann daher die entsprechend dem als Referenzelement dienenden Resonator 1 geregelte Lasermittenwellenlänge zusätzlich bezüglich der möglichen Drift, insbesondere der Temperaturdrift dieses Referenzelements stabilisiert werden.

Das erfindungsgemäße Verfahren kann auch mittels einer in Fig. 6 dargestellten Schaltung erzielt werden. Anstelle des optischen Polarisationsdetektors 10 wird hier der Ausgangsstrahl 9 durch einen einzigen optoelektrischen Detektor 25 in ein beide Polarisationsmoden und deren temperaturabhängige Phasenänderungen enthaltendes elektrisches Signal 26 umgewandelt. Dieses wird einer einzigen Signale trennenden Steuereinrichtung oder zwei getrennten Steuereinrichtungen 27 und 28 zugeleitet. Diese werden im Takt der Modulationsfrequenz $U_{Mod}$ angesteuert, und zwar die eine Steuereinrichtung 28 mit dem invertierten Signal. Dadurch wird abwechselnd z.B. bei hohem Potential die obere Steuereinrichtung 27 in Durchlaßrichtung geschaltet, wenn gerade der Resonator 1 so angesteuert wird, daß er auf der Polarisationsmode $\phi_{OTE}$ wirksam ist und nach einer halben Periodendauer wird mit hohem Potential die untere Steuereinrichtung 28 in Durchlaßrichtung geschaltet, wenn gerade der Resonator 1 so angesteuert wird, daß er auf der Polarisationsmode $\phi_{OTM}$ wirksam ist.

Der weitere Verfahrensablauf und Schaltungsaufbau ist wie anhand der Fig. 5 beschrieben. Auch hier kann wieder gleichzeitig durch eine zweite, aber sinusförmige Modulationsspannung $U_{MS}$ die Laserwellenlänge detektiert und geregelt werden.

Zweckmäßig ist die Einschaltzeit für die Steuereinrichtung 27,28 etwas verzögert und der Abschaltzeitpunkt liegt früher als die Flanke der Modulationsspannung. Dadurch erhält man, wie Fig. 4

zeigt, kürzere Einschaltzeiten $\Delta t_1$ und $\Delta t_3$ als einer halben Periodendauer bzw. einer Impulsdauer entsprechen und im Flankenbereich erhält man eine Totzeit $\Delta t_2$, während der keine der Steuereinrichtungen 27, 28 aktiv ist. Hierdurch werden Störungsmöglichkeiten, die im Bereich der Flanken auftreten können, unterdrückt.

**Patentansprüche**

1. Verfahren zur Stabilisierung der Filterkurvenmittenwellenlänge eines mit Steuerelektroden versehenen, mittels des elektrooptischen Effekts steuerbaren optischen Resonators, insbesondere zur Regelung der Wellenlänge von Halbleiterlasern, indem die Lichtwelle eines Lasers, dessen Mittenwellenlänge in einem Bereich maximaler Transmission des Resonators liegt, durch den Resonator hindurchgeleitet wird und dabei die Lichtwelle moduliert wird, **dadurch gekennzeichnet,** daß die Lichtwelle (8) des Lasers (L) in den Resonator (1) unter einem solchen von den Polarisationshauptachsen desselben abweichenden Winkel eingestrahlt wird, daß die beiden möglichen Polarisationszustände auftreten, daß an die Steuerelektroden (6, 7) des Resonators (1) eine Modulationsspannung ($U_{Mod}$) in Form einer Rechteckspannung angelegt wird, deren unterer Wert so groß ist, daß die Filterkurvenmittenwellenlänge des Resonators (1) bei der einen Polarisationsmode ($\phi_{OTE}$ oder $\phi_{OTM}$) des Resonators (1) liegt und deren höherer Wert so groß ist, daß die Filterkurvenmittenwellenlänge bei der anderen Polarisationsmode ($\phi_{OTM}$ oder $\phi_{OTE}$) des Resonators (1) liegt, daß aus der Resonatorausgangslichtwelle (9) den beiden Polarisationsmoden entsprechende elektrische Signale gewonnen werden, daß die temperaturbedingte Phasenverschiebung ($d\phi_{TM}$) der beiden Polarisationsmoden festgestellt und aus der Größe dieser Phasenverschiebung ein Steuersignal (22) abgeleitet wird und daß über das Steuersignal (22) durch Änderung der Temperatur und/oder des Brechungsindexes des Resonators (1) die Phasenverschiebung zu Null geregelt wird.

2. Verfahren nach Anspruch 1, dadurch gekennzeichnet, daß die Resonatorausgangslichtwelle (9) einem optischen Teiler (10) zugeleitet wird, der die beiden Polarisationsmoden trennt, daß jede der Polarisationsmoden einem optoelektrischen Wandler (12, 18) zugeleitet wird und deren Ausgangssignal (13, 19) je einem Phasendetektor (14, 20) zugeführt wird, und daß das Ausgangssignal (15; 21) der Phasendetektoren (14; 20) je einem Eingang ( + ,-) eines Differenzgliedes (16) zugeführt wird und dieses aus den der Phasendifferenz der Polarisationsmoden entsprechenden Ausgangssignalen (15, 21) eine Regelspannung (22) erzeugt, die dazu verwendet wird, die Brechungsindexänderung des Resonators (1) zu Null zu regeln.

3. Verfahren nach Anspruch 2, dadurch gekennzeichnet, daß die Regelspannung (22) den Steuerelektroden (6, 7) des Resonators (1) zugeleitet wird.

4. Verfahren nach Anspruch 2 oder 3, dadurch gekennzeichnet, daß die Regelspannung (22) einer Temperatursteuereinrichtung des Resonators (1) zugeleitet wird.

5. Verfahren nach Anspruch 1, dadurch gekennzeichnet, daß die Resonatorausgangslichtwelle (9) einem optoelektrischen Detektor (25) zugeleitet wird, dessen Ausgangssignal (26) zwei getrennten Steuereinrichtungen (27, 28) zugeleitet wird, die zueinander im Gegentakt von der Modulationsspannung ($U_{Mod}$) angesteuert werden, so daß die eine Steuereinrichtung (27) das Signal der einen Polarisationsmode ($\phi_{TE}$) und die andere Steuereinrichtung (28) das Ausgangssignal der anderen Polarisationsmode ($\phi_{TM}$) verarbeiten und je ein entsprechendes Ausgangssignal (13 bzw. 19) liefern, die getrennt je einem Phasendetektor (14, 20) zugeführt werden, und daß das Ausgangssignal (15, 21) der Phasendetektoren (14, 20) je einem Eingang ( + ,-) eines Differenzglieds (16) zugeführt wird und dieses aus den der Phasendifferenz der beiden Polarisationsmoden entsprechenden Ausgangssignalen (15, 21) eine Regelspannung (22) erzeugt, die dazu verwendet wird, die Brechungsindexänderung des Resonators (1) zu Null zu regeln.

6. Verfahren nach Anspruch 5, dadurch gekennzeichnet, daß die Schaltzeit ($\Delta t_1, \Delta t_3$), in der die Steuereinrichtung (27, 28) aktiv geschaltet werden, kürzer ist als die halbe Periodendauer der Frequenz der Modulationsspannung ($U_{Mod}$) und im Bereich der Flanken der Modulationsspannung ($U_{Mod}$) eine Totzeit ($\Delta t_2$) aufweist.

7. Verfahren nach einem der Ansprüche 1 bis 6, dadurch gekennzeichnet, daß den Steuerelektroden (6, 7) des Resonators (1) und den Phasendetektoren (14, 20) eine zweite Modulationsspannung ($U_{MS}$) in Form einer sinusförmigen Wechselspannung zugeführt wird, und daß das Ausgangssignal (15) als Regelgröße einem Regler zur Regelung der Laserwellenlänge ($\bar{\lambda}$) und/oder der Laserleistung über den Eingangsstrom und/oder dem Temperaturstellglied des Lasers (L) zugeführt wird.

## Claims

1. Method of stabilizing the peak wavelength of the filter curve of an optical resonator provided with control electrodes and controllable by means of the electrooptical effect, particularly for controlling the wavelengths of semiconductor lasers, by passing the lightwave of a laser whose peak wavelength lies in a region of maximum transmission of the resonator through the resonator and thus modulating said lightwave, **characterized in** that the lightwave (8) from the laser (L) enters the resonator (1) at such an angle with respect to the principal axes of polarization of the resonator that the two possible polarization states result, that the control electrodes (6, 7) of the resonator (1) are subjected to a modulating voltage ($U_{Mod}$) in the form of a square-wave voltage whose lower value is so large that the peak wavelength of the filter curve of the resonator (1) lies at one of the modes of polarization ($\Phi_{OTE}$ or $\Phi_{OTM}$) of the resonator (1), and whose upper value is so large that the peak wavelength of the filter curve lies at the other mode of polarization ($\Phi_{OTM}$ or $\Phi_{OTE}$) of the resonator (1), that electric signals corresponding to the two modes of polarization are derived from the output lightwave (9) of the resonator (1), that the temperature-dependent phase difference ($d\phi_{TM}$) between the two modes of polarization is determined and a control signal (22) is derived from the magnitude of the phase difference, and that the phase difference is reduced to zero by changing the temperature and/or the refractive index of the resonator (1) via the control signal (22).

2. A method as claimed in claim 1, characterized in that the output lightwave (9) of the resonator (1) is directed to an optical divider (10) which separates the two modes of polarization, that each of the modes of polarization is passed to an optical-to-electric transducer (12, 18), that the output of each of the optical-to-electric transducers (12, 18) is fed to a phase detector (14, 20), that the output (15, 21) of each of the phase detectors (14, 20) is fed to one of the inputs (+, -) of a difference element (16), and that the difference element (16) derives from the outputs (15, 21) corresponding to the phase difference between the two modes of polarization a control voltage (22) which is used to adjust the change in the refractive index of the resonator (1) to zero.

3. A method as claimed in claim 2, characterized in that the control voltage (22) is applied to the control electrodes (6, 7) of the resonator (1).

4. A method as claimed in claim 2 or 3, characterized in that the control voltage (22) is applied to a temperature controller of the resonator (1).

5. A method as claimed in claim 1, characterized in that the output lightwave (9) of the resonator (1) is directed to an optical detector (25) whose output (26) is fed to two separate controllers (27, 28) which are controlled in the push-pull mode by the modulating voltage ($U_{Mod}$), so that one of the controllers (27) processes the signal of one of the modes of polarization ($\Phi_{TE}$), and the other (28) the signal of the other mode of polarization ($\Phi_{TM}$), that the output (13, 19) of each of the controllers (27, 28) is fed to a phase detector (14, 20), that the output (15, 21) of each of the phase detectors (14, 20) is fed to one of the inputs (+, -) of a difference element (16), and that the difference element (16) derives from the outputs (15, 21) corresponding to the phase difference between the two modes of polarization a control voltage (22) which is used to adjust the change in the refractive index of the resonator (1) to zero.

6. A method as claimed in claim 5, characterized in that the periods ($\Delta t_1$, $\Delta t_3$) for which the controllers (27, 28) are switched to the active state are shorter than half the period of the modulating voltage ($U_{Mod}$), and that there is a dead time ($\Delta t_2$) in the region of the edges of the modulating voltage ($U_{Mod}$).

7. A method as claimed in any one of claims 1 to 6, characterized in that a second modulating voltage ($U_{MS}$) in the form of a sinusoidal alternating voltage is applied to the control electrodes (6, 7) of the resonator (1) and to the phase detectors (14, 20), and that the output (15) of one of the phase detectors (14) is applied as a controlled variable to a controller for controlling the laser wavelength ($\overline{\lambda}$) and/or the laser power via the input current, and/or to the temperature controller of the laser (L).

## Revendications

1. Procédé de stabilisation de la longueur d'onde au milieu de la courbe de filtrage d'un résonateur optique doté d'électrodes de commande, pilotable au moyen de l'effet électro-optique, en particulier pour la régulation de la longueur d'onde des lasers à semi-conducteurs, dans lequel l'onde lumineuse d'un laser, dont la longueur d'onde médiane se situe dans un domaine de transmission maximale du résonateur, est envoyée à travers le résonateur et est modulée au cours de ce passage, caractérisé en ce que l'onde lumineuse (8) du laser (L) est injectée dans le résonateur (1) selon un angle divergeant des axes de polarisation principaux de celui-ci de sorte que les deux états de polarisation possibles s'établissent, en ce qu'une tension de modulation ($U_{Mod}$) est appliquée sous forme d'une tension rectangulaire aux électrodes de commande (6, 7) du résonateur (1) dont la valeur inférieure est si élevée que la longueur d'onde au milieu de la courbe de filtrage du résonateur (1) correspond à l'un des modes de polarisation ($\phi_{OTE}$ ou $\phi_{OTM}$) du résonateur (1) et dont la valeur supérieure est si élevée que la longueur d'onde au milieu de la courbe de filtrage correspond à l'autre mode de polarisation ($\phi_{OTM}$ ou $\phi_{OTE}$) du résonateur (1), en ce que des signaux électriques correspondant aux deux modes de polarisation sont générés à partir de l'onde lumineuse sortant du résonateur (9), en ce que le déphasage inhérent à la température ($d\phi_{TM}$) des deux modes de polarisation est défini et qu'il est dérivé un signal de commande (22) à partir de la valeur de ce déphasage et en ce que le déphasage est régulé à zéro par le signal de commande (22) par modification de la température et/ou de l'indice de réfraction du résonateur (1).

2. Procédé selon la revendication 1, caractérisé en ce que l'onde lumineuse (9) sortant du résonateur est envoyée à un diviseur optique (10) qui sépare les deux modes de polarisation, en ce que chacun des modes de polarisation est injecté à un convertisseur opto-électrique (12, 18) dont le signal de sortie (13, 19) est délivré à un détecteur de phase (14, 20), et en ce que le signal de sortie (15, 21) des détecteurs de phase (14, 20) est injecté à une entrée (+, -) d'un différenciateur (16) qui, à partir des signaux de sortie (15, 21) correspondant à la différence de phase des modes de polarisation, génère une tension de régulation (22) qui est utilisée pour réguler à zéro la variation de l'indice réfraction du résonateur (1).

3. Procédé selon la revendication 2, caractérisé en ce que la tension de régulation (22) est appliquée aux électrodes de commande (6, 7) du résonateur (1).

4. Procédé selon la revendication 2 ou 3, caractérisé en ce que la tension de régulation (22) est appliquée à un dispositif de commande thermique du résonateur (1).

5. Procédé selon la revendication 1, caractérisé en ce que l'onde lumineuse (9) sortant du résonateur est envoyée à un détecteur opto-électrique (25) dont le signal de sortie (26) est injecté à deux dispositifs de commande (27, 28) séparés, qui sont commandés réciproquement de manière symétrique par la tension de modulation ($U_{Mod}$) de sorte que l'un des dispositifs de commande (27) traite le signal de l'un des modes de polarisation ($\phi_{TE}$) et l'autre dispositif de commande (28) traite le signal de sortie de l'autre mode de polarisation ($\phi_{TM}$) et que chacun délivre un signal de sortie correspondant (13 et 19), lesquels signaux sont injectés séparément à un détecteur de phase (14, 20), et de sorte que le signal de sortie (15, 21) des détecteurs de phase (14, 20) est injecté à une entrée (+, -) d'un différenciateur (16) qui, à partir des signaux de sortie (15, 21) correspondant à la différence de phase des deux modes de polarisation, génère une tension de régulation (22) qui est utilisée pour réguler à zéro la variation de l'indice de réfraction du résonateur (1).

6. Procédé selon la revendication 5, caractérisé en ce que le temps de commutation ($\Delta t_1$, $\Delta t_3$), pendant lequel les dispositifs de commande (27, 28) sont activés, est plus court que la demi-période de la fréquence de la tension de modulation ($U_{Mod}$) et présente un temps de retard ($\Delta t_2$) dans le domaine des fronts de la tension de modulation ($U_{Mod}$).

7. Procédé selon l'une des revendications 1 à 6, caractérisé en ce qu'une deuxième tension de modulation ($U_{MS}$) est appliquée sous forme d'une tension alternative sinusoïdale aux électrodes de commande (6, 7) du résonateur (1) et aux détecteurs de phase (14, 20) et en ce que le signal de sortie (15) est envoyé comme grandeur réglante à un régulateur servant à la régulation de la longueur d'onde ($\lambda$) du laser et/ou de la puissance du laser par le courant d'entrée et/ou à l'organe de réglage de la température du laser (L).

Fig. 1

Fig. 2

Fig. 3

Fig. 4

EP 0 250 818 B1

Fig. 5

Fig. 6

8